# NEUE EUROPÄISCHE PATENTSCHRIFT

(11) **EP 0 762 961 B2**
(45) Veröffentlichungstag und Bekanntmachung des Hinweises auf die Entscheidung über den Einspruch: **14.05.2003**
(45) Hinweis auf die Patenterteilung: 14.07.1999
(21) Anmeldenummer: 95915194.5
(22) Anmeldetag: 08.04.1995
(51) Int. Cl.: B60R 16/02

(54) **LENKSTOCKSCHALTER MIT WICKELFEDER**
STEERING-COLUMN SWITCH WITH BUFFER SPRING
COMMUTATEUR FIXE A LA COLONNE DE DIRECTION AVEC RESSORT SPIRAL

(30) Priorität: 26.05.1994 DE 4418329; 30.03.1995 DE 19511693
(43) Veröffentlichungstag der Anmeldung: 19.03.1997
(73) Patentinhaber: ITT Automotive Europe GmbH, 60488 Frankfurt am Main (DE)
(72) Erfinder: KLEIN, Rudolf, D-74348 Lauffen a.N. (DE); CRISTOFARO, Salvador, D-73114 Schlat (DE); HECHT, Walter, D-74321 Bietigheim-Bissingen (DE)
(74) Vertreter: Dreiss, Fuhlendorf, Steimle & Becker
(86) Internationale Anmeldenummer: EP9501298
(87) Internationale Veröffentlichungsnummer: WO95032877

(56) Entgegenhaltungen:
- EP-A- 0 195 831
- EP-A- 0 505 114
- EP-A- 0 520 503
- EP-A- 0 591 730
- WO-A-91/17592
- DE-U- 9 300 909
- US-A- 4 840 078
- US-A- 4 921 428
- US-A- 5 100 331

## Beschreibung

Bei vielen Fahrzeugen, insbesondere Kraftfahrzeugen, ist zur Lenkung ein Lenkrad vorgesehen, welches über eine Lenksäule auf die Räder (bzw. auf ein Ruder) einwirkt und somit die Lenkung des Fahrzeugs ermöglicht. Im Bereich der Lenksäule ist weiterhin in der Regel noch ein sogen. Lenkstockschalter angeordnet, dessen Gehäuse gegenüber dem Fahrzeuggehäuse ortsfest ist. Der Lenkstockschalter dient zur Betätigung einer Vielzahl elektrisch betriebener Einrichtungen, wie Wischer, Waschanlage, Beleuchtung usw..

Weiterhin ist zur besseren Erreichbarkeit eines die akustische Warneinrichtung auslösenden Kontaktes (z.B. Autohupe) ein Kontakt an dem drehbaren Lenkrad angebracht, welcher über das Gehäuse des Lenkstockschalters mit der Warneinrichtung verbunden ist. Da über die Gesamtbetriebsdauer des Fahrzeugs die elektrische Verbindung zwischen Warnkontakt und dem Gehäuse des Lenkstockschalters sichergestellt sein muß, wird die Verbindung zwischen Warnkontakt und Gehäuse des Lenkstockschalters über eine sogen. Wickelfeder geführt. Entsprechendes gilt für die elektrische Leitung zur Airbagauslösung.

Die Wickelfeder stellt eine zylinderförmig aufgewickelte Verbindungsleitung dar, welche mit ihrem einen Ende gehäusefest an dem Gehäuse des Lenkstockschalters verankert und mit ihrem anderen Ende mit dem drehbeweglichen Warnkontakt bzw. Airbag oder eine andere am Lenkrad befindliche elektrische Einrichtung verbunden ist. Da sich die Drehwinkelbewegung des Warnkontaktes während des Lenkvorgangs weitgehend über die einzelnen Wicklungen der Wickelfeder verteilt, ist die Relativbewegung der einzelnen Abschnitte der Wickelfeder vergleichsweise klein, so daß die Verbindungsdrähte auch bei einer langen Benutzungsdauer des Fahrzeuges nur geringfügig beaufschlagt werden und somit eine große Lebensdauer haben.

Nachteilig bei den bekannten Wickelfedern ist es, daß diese in einem eigenen Gehäuse von einem Spezialhersteller zugeliefert und das Federgehäuse mit dem Gehäuse des Lenkstockschalters bei der Fahrzeugmontage (beispielsweise durch Verrrasten) verbunden wird.

Aus der US-PS 4840078 ist es bekannt, einen Lenkstockschalter, ein Wickelfedergehäuse (vielfach auch als Drehverbindergehäuse bezeichnet) und ein Lenkrad übereinander an einer Lenksäule anzuordnen. Die genannten Baugruppe stehen dabei in einem engen räumlichen Kontakt zueinander.

Aus der Figur 21 der WO 91/17592 ist ein Lenkstockschalter mit einer Verreigelungseinrichtung bekannt, die aus mindestens einem von einem Stößel 65 betätigten Verriegelungswinkel 69 besteht. Diese Verriegelungseinrichtung ist aufwendig in Herstellung und Montage und außerdem kann sie nur kleine Drehmomente übertragen.

Die Erfindung geht daher aus von einem Lenkstockschalter der sich aus dem Oberbegriff des Anspruchs 1 ergebenden Gattung. Aufgabe der Erfindung ist es, die Kombination aus Lenkstockschalter und elektrischems Verbindungselement zwischen dem Gehäuse des Lenkstockschalters und der elektrischen Einrichtung am Lenkrad zu vereinfachen, wobei insbesondere der Aufbau der beschriebenen Kombination, als auch die Montage vereinfacht werden sollen.

Die Aufgabe wird durch die sich aus dem kennzeichnenden Teil des Anspruchs 1 ergebende Merkmalskombination gelöst. Im Prinzip wird also hier ein besonderes Verriegelungsteil vorgesehen, welches unterschiedliche Verriegelungsstellungen einnehmen kann, je nach dem, ob der Schalter transportiert oder in ein Kraftfahrzeug eingebaut wird bzw. ist. Selbst wenn aber man nur einen Deckel vorsehen würde, welcher zwei dem Zustand des Schalters entsprechende Raststellungen besitzt, so würde sich doch mit der Lageänderung des Deckels auch gleichzeitig die Größe der Kammer ändern. Dies würde aber wieder Rückwirkungen auf die Führung und Halterung der zu beherbergenden Wickelfeder haben.

An sich ist es denkbar, daß das Verriegelungsteil je nach Zustand des Schalters zwei unterschiedliche Raststellungen einnehmen kann, wobei in der einen Raststellung der Deckel drehfest gehalten und in der zweiten Raststellung der Deckel gegenüber dem Schalterdeckel drehbar ist. Soll aber innerhalb der Verriegelungszustände das Verriegelungsteil elastisch in seiner Raststellung gehalten werden, um so Toleranzen ausgleichen zu können, so empfiehlt sich in Weiterbildung der Erfindung die Merkmalskombination nach Anspruch 2. Dabei ist das Verriegelungsteil in Richtung der Drehachse des Deckels bzw. der Längsachse der Lenkstange in dem Deckel und/oder dem Schaltergehäuse gelagert, wobei die Federspannung so gewählt ist, daß sie versucht, das Verriegelungsteil aus dem Schaltergehäuse herauszudrücken,welches dabei gleichzeitig mit Rastmitteln in die Raststellung am Schaltergehäuse gezogen wird. Dieses Prinzip kann für beide Raststellungen des Verriegelungsteils, also bei Drehsicherung und fehlender Drehsicherung des Deckels angewendet werden. Es ist aber auch möglich, dieses Prinzip nur für die drehgesicherte Raststellung des Verriegelungsteils anzuwenden.

Eine besonders einfache Rastmöglichkeit für das Verriegelungsteil ergibt sich nach der Merkmalskombination nach Anspruch 3. Dabei dienen federnde in das Gehäuseinnere ragende Laschen des Federteils als Rastmittel, die an entsprechenden Vorsprüngen des Schaltergehäuses angreifen. Um die Verrastung weitgehend unabhängig von der Winkelstellung des Deckels zum Schaltergehäuse - durchführen zu können, empfiehlt es sich, die Vorsprünge durch eine umlaufende im wesentlichen ringförmige Kante des Schaltergehäuses darzustellen.

Um die Drehsicherung des Deckels zu erreichen, ist dieser in Weiterbildung der Erfindung entsprechend den Merkmalen nach Anspruch 3 unverdrehbar gegenüber dem Verriegelungsteil geführt. Dies läßt sich sehr einfach durch die Merkmale nach Anspruch 4 erreichen, so daß das Verriegelungsteil gegenüber dem Deckel zwar in dessen Längsrichtung verschoben, aber diesem gegenüber nicht gedreht werden kann.

Eine einfache Drehlagerung für den Deckel gegenüber dem Schaltergehäuse ergibt sich aus der Merkmalskombination nach Anspruch 5.
Um nun gleichzeitig noch zu erreichen, daß unabhängig von der Lage des Verriegelungsteils der Deckel elastisch in seinem Drehlager gehalten wird, empfiehlt sich in Weiterbildung der Erfindung die Merkmalskombination nach Anspruch 6. Danach stützt sich die Feder nicht einfach an dem Schaltergehäuse, sondern über einen im Bereich des Drehlagers liegenden Abschnitt des Deckels an dem Schaltergehäuse ab. Damit wird die Abstützkraft der Feder gleichzeitig auch noch als elastische Haltekraft für das Drehlager des Deckels ausgenutzt, wie dies gemäß Anspruch 7 vorgeschlagen wird.

Weiter oben war schon vorgeschlagen worden, für das Verriegelungsteil zwei Raststellungen vorzusehen, die der Drehbarkeit des Deckels bzw. dessen drehfestem Zustand entsprechen.

Vielfach ist es aber erwünscht, eine Drehbarkeit des Deckels erst dann zuzulassen, wenn der Lenkstockschalter montiert und das Lenkrad auf dem Lenkstock aufgesetzt ist. In diesem Fall kann auf eine zweite Raststellung verzichtet werden. Vielmehr läßt sich durch die entsprechende Merkmalskombination nach Anspruch 8 die Möglichkeit ausnutzen, durch das Aufsetzen des Lenkrades auf den Lenkstock an das Verriegelungsteil anzugreifen und es entgegen der durch die Spiralfeder bedingten Vorspannung zu verschieben. Soweit man dafür sorgt, daß bei der axialen Endstellung des Lenkrades die Rastenden des Verriegelungsteils in einem Bereich des Schaltergehäuses liegen, welcher keine Drehsicherung gegenüber dem Verriegelungsteil bildet, so ist in diesem Zustand das Verriegelungsteil gegenüber dem Schaltergehäuse drehbar, so daß es auch einer Drehbewegung des Deckels gegenüber dem Schaltergehäuse nicht entgegensteht. Dabei wird der Deckel in der Regel mechanisch mit dem Lenkrad gekoppelt sein, so daß der Deckel der Drehbewegung des Lenkrades folgt.

Eine einfache, in Abhängigkeit von der Längsstellung des Verriegelungsteils stehende Drehsicherung ergibt sich aus der Merkmalskombination nach Anspruch 9. Danach greifen in dem ersten Rastbereich radial (z.B. nach innen) abstehende Vorsprünge an z.B. radial nach außen gerichteten Vorsprüngen am Schaltergehäuse an. Diese in Längsrichtung des Lenkstocks verlaufenden Gehäusevorsprünge reichen aber nicht in den Bereich, in den die Vorsprünge der Rasthaken reichen, falls das Verriegelungsteil in seiner Längsrichtung in eine die Drehbewegung des Deckels ermöglichende Lage gebracht wird. Dabei können eine Vielzahl von radialen Vorsprüngen an der Schalterwand vorgesehen sein, die jede Drehbewegung des Deckels verhindern. Es können aber auch nur einzelne radial nach innen weisende Vorsprünge vorgesehen sein, welche auch im drehgesicherten Zustand eine Drehung des Deckels um einen gewissen Winkelbereich ermöglichen.

Um die empfindliche Wickelfeder vor Schlägen an das Schaltergehäuse bzw. den Deckel zu schützen, empfiehlt sich in Weiterbildung der Erfindung die Merkmalskombination nach Anspruch 10.

Ausführungsbeispiele der Erfindung werden nachfolgend anhand der Zeichnung erläutert. Darin zeigt:
- Fig. 1: einen Lenkstockschalter mit eingesetzter kompletter Wickelfeder gemäß dem Stahl.
- Fig. 2: einen Lenkstockschalter mit an dem Gehäuse angegossener Kammer,
- Fig. 3: eine Wickelfedereinheit zum Einsatz in die Kammer nach Fig. 2,
- Fig. 4: einen Lenkstockschalter mit Kammer und eingefügten Anschlußkontakten,
- Fig. 5: eine Skizze eines auf zwei ringförmigen Wänden des Schaltergehäuses drehbar sitzenden Deckels,
- Fig. 6: die Drehlagerung und Verrastung des Deckels nach Fig. 5,
- Fig. 7: in auseinandergezogener Darstellung einen mit einem besonderen Verriegelungsteil versehenen Lenkstockschalter,
- Fig. 8: einen Ausschnitt des Lenkstockschalters mit Kammer für die Wickelfeder gemäß Fig. 7 im zusammengebauten, drehverriegelten Zustand,
- Fig. 9: einen Schnitt durch einen Teil des Schalters nach Fig. 8,
- Fig. 10: einen skizzierten Querschnitt durch den Schalter nach Fig. 9 und
- Fig. 11: den Schalter nach Fig. 8 im entriegelten Zustand.

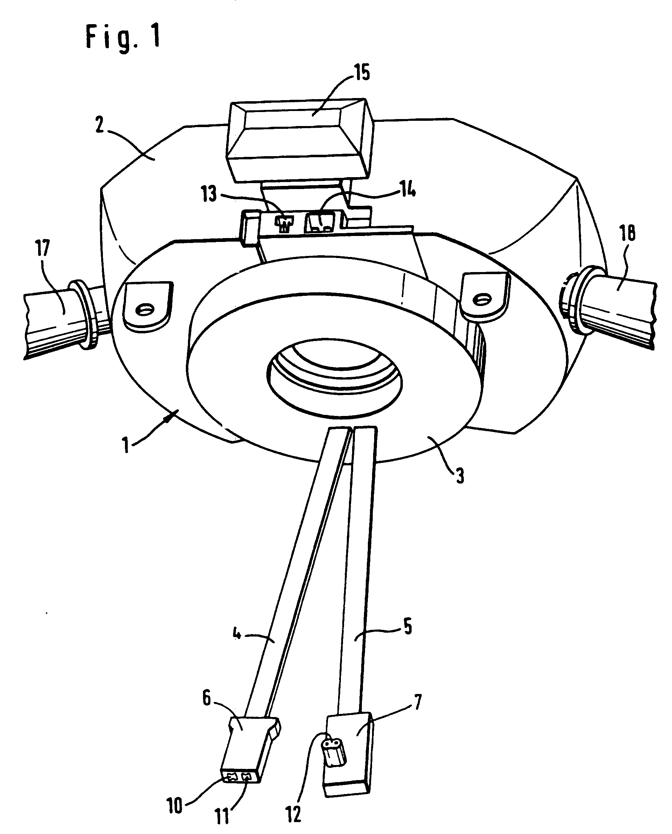

Fig. 1 zeigt einen Lenkstockschalter 1, dessen Schaltergehäuse 2 an einer nicht dargestellten hülsenförmigen, chassisfesten Lenksäule befestigt ist. Durch die Lenksäule ist eine ebenfalls nicht dargestellte drehbare Lenkstange geführt, an deren dem Fahrer zugewandten Ende das Lenkrad befestigt ist. Mit der Lenkstange bzw. dem Lenkrad drehbar verbunden ist das in sich geschlossene Federgehäuse 3, welches gegenüber dem Schaltergehäuse 2 und in diesem drehbar gelagert ist.

Aus dem Federgehäuse 3 ragen zwei Leitungsenden 4,5, an deren Enden Stecker 6,7 befestigt sind, welche in nicht dargestellte, an dem Lenkrad befestigte Aufnahmestecker eingesteckt werden. Die Stecker weisen Kontaktpaare 10,11,12 auf, welche zu Schaltern am Lenkrad geführt werden, welche zum Auslösen des Airbags (Kontaktpaar 12) der Hupe (Kontaktpaar 11) oder der Betätigung eines Radios (Kontaktpaar 10) dienen.

Bei einer Drehbewegung des Lenkrades folgen die in das Lenkrad eingesteckten Stecker 6,7 sowie das mit der Lenkstange verbundene Federgehäuse 3 dessen Bewegung.

Das andere Ende der Wickelfeder ist, für den Betrachter nicht sichtbar, mit Anschlüssen 13,14,15 verbunden, wobei diese Anschlüsse zusammen mit dem Schaltergehäuse 2 gegenüber dem Chassis des Fahrzeugs fixiert sind.

An dem Gehäuse ist weiterhin noch ein Warnlichtschalter befestigt sowie (abgebrochen dargestellt) Betätigungshebel 17,18 zur Betätigung der Wisch-Waschanlage bzw. der Beleuchtung.

Nachteilig bei der Konstruktion gemäß Fig. 1 ist es, daß das in sich geschlossene Wickelfedergehäuse 3 an dem Schaltergehäuse 2 befestigt werden muß, wobei das in sich geschlossene Gehäuse 3 einen gemäß der Erfindung vermeidbaren Aufwand darstellt.

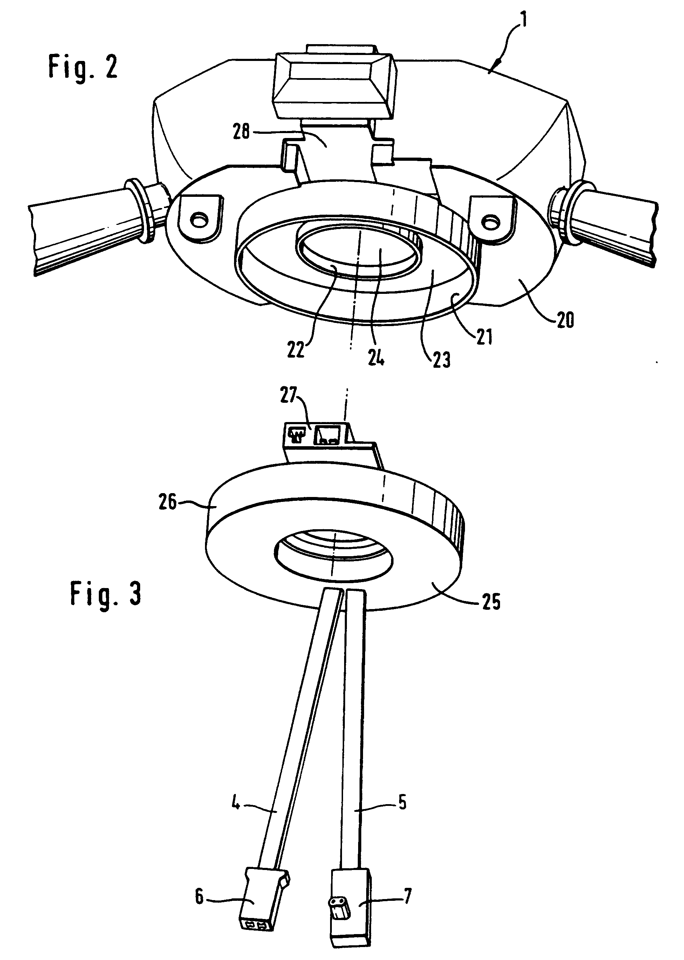

Fig. 2 zeigt eine Ausführung eines gemäß der Erfindung modifizierten Lenkstockschalters 1, an dessen Deckelteil 20 eine erste Wand 21 sitzt, welche im wesentlichen den Mantel eines Kreiszylinders bildet. Gleichzeitig ist an das Deckelteil 20 noch eine zweite Wand 22 angeformt, die ebenfalls den Mantel eines zweiten Kreiszylinders bildet, wobei der zweite Kreisizylinder einen kleineren Radius besitzt als der die erste Wand 21 formende erste Kreiszylinder. Auf diese Weise ist an das Deckelteil 20 eine ringförmige Deckelkammer 23 angeformt, deren innere Wand 22 die durchgehende Öffnung 24 im Schaltergehäuse 2 begrenzt, durch welche die Lenksäule ragt.

Fig. 3 zeigt den zu der Deckelkammer 23 gehörenden Deckel 25, welcher ebenfalls wie die Deckelkammer 23 die Form einer Ringkammer (ringförmiger Deckelhohlraum) aufweist, wobei die Seitenwand 26 koaxial innerhalb oder außerhalb zur ersten Wand 21 verläuft und gegenüber dieser drehbeweglich in dem Schaltergehäuse 2 gelagert ist. Die für den Betrachter von Fig. 3 nicht sichtbare Wickelfeder mündet an ihrem der der Lenkstange abgewandten Ende in einen Stecker 27, welcher in eine Ausnehmung 28 in dem Schaltergehäuse 2, beispielsweise rastend, eingefügt werden kann.

Es zeigt sich, daß durch die Erfindung das Gehäuse 25 für die Wickelfeder sehr viel einfacher aufgebaut sein kann, da es nicht mehr in sich geschlossen ist, sondern nur noch eine offene Ringkammer darstellt.

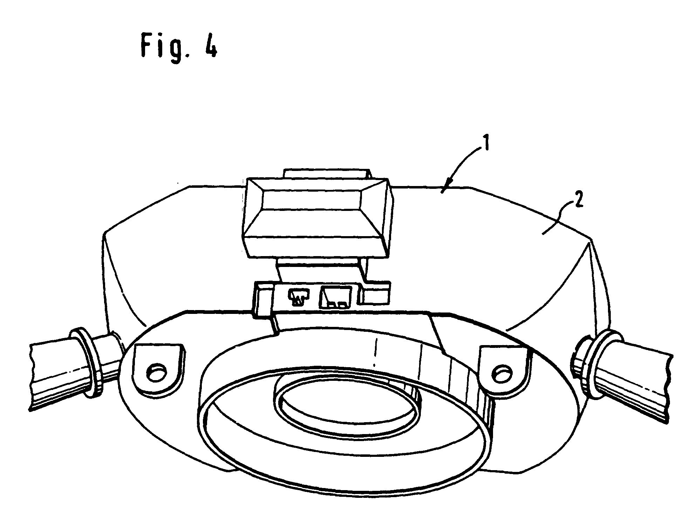

Fig. 4 zeigt eine zweite Ausführungsform der Erfindung, bei der der Stecker 27 nach Fig. 3 in das Gehäuse 2 des Lenkstockschalters 1 integriert wurde, während sich ansonsten der Aufbau des Lenkstockschalters nach Fig. 2 von dem nach Fig. 4 nicht unterscheidet.

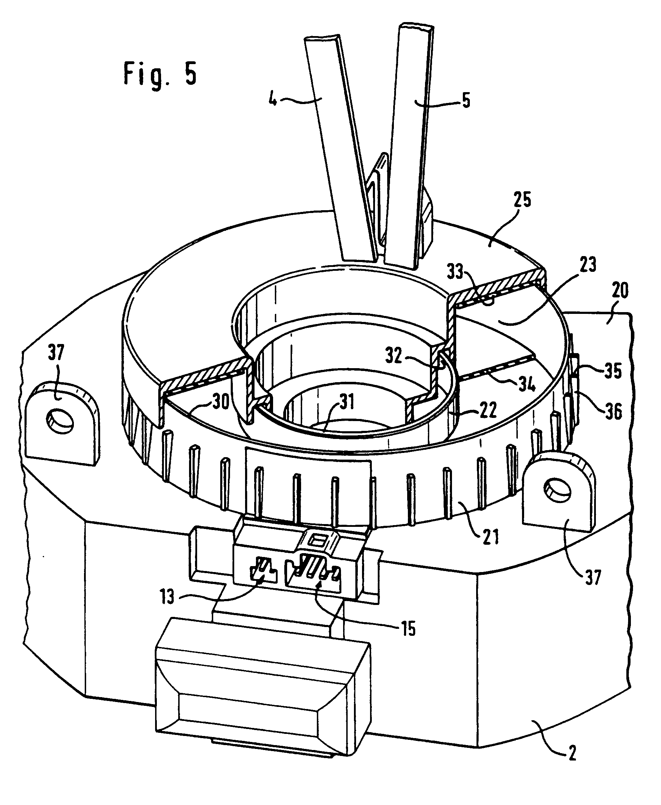

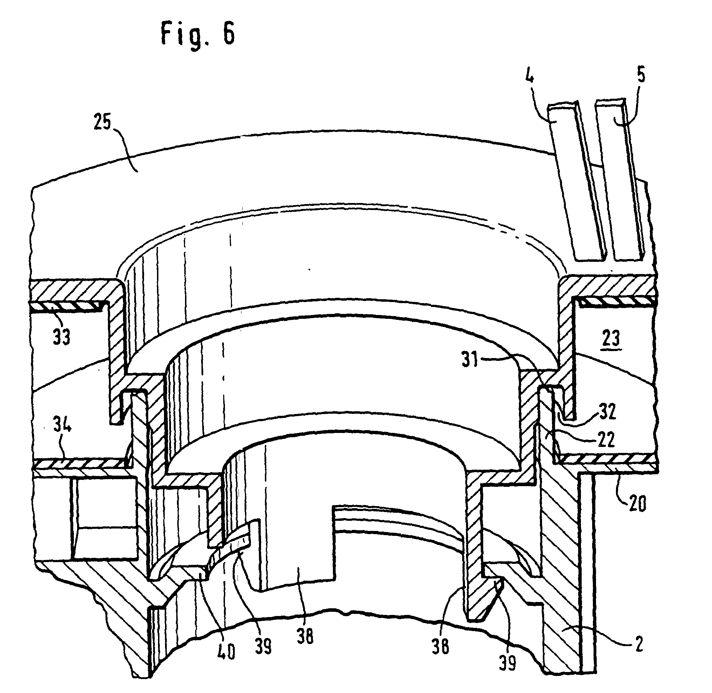

In Fig. 5 und 6 ist ein Lenkstockschalter ohne ein erfindungsgemäßes Verriegelungsteil dargestellt. In Fig. 1 ist ein Deckel 25 zu erkennen, welcher mit dem Deckelteil 20 des Schaltergehäuses 2 eine geschlossene Deckelkammer 23 formt. In der Deckelkammer 23 kann die schon beschriebene, aber hier nicht dargestellte, Wickelfeder angeordnet werden, deren sich mit dem Lenkrad drehendes Ende an die Leitungsenden 4,5 angeschlossen ist, während das andere sich nicht mit dem Lenkstock drehende Ende, wie weiter oben schon beschrieben, an ortsfesten Anschlüssen 13,14 mündet. Wie aus Fig. 5 ersichtlich, besitzen sowohl die äußere Wand 21 als auch die innere Wand 22 ringförmig umlaufende Kanten 30,31, auf denen der Deckel 25 drehbar aufsitzt. Dabei ist er durch eine umlaufende Nut 32, die auf der umlaufenden Kante 31 aufsitzt, gegen größere Radialbewegungen gesichert.

Die Drehbewegung des Deckels 25 gegenüber der umlaufenden Kante 30 kann noch durch eine ringförmige Dämpfungsscheibe 33 erleichtert werden, die gleichzeitig auch noch eine Bewegung der in der Dekkelkammer 23 befindlichen Wickelfeder dämpft und zum Schutz dieser Feder bei einer Bewegung beiträgt. Entsprechendes gilt für die zweite Dämpfungsscheibe 34, die in den Boden der Deckelkammer 23 eingelegt ist. Die Stirnflächen 35 der Rippen 36, die um die Außenfläche der ersten Wand 21 gleichmäßig verteilt sind, bieten vergleichsweise wenig Reibungsfläche und tragen den äußeren Rand des Deckels 25 in in Fig. 5 senkrechter Richtung. Die Ösen 37 am Gehäuse des Schalters 2 dienen Befestigungs- zwecken.

Fig. 6 zeigt skizziert den Deckel nach Fig. 5 ausschnittsweise und mit ebenfalls geschnittenem Schaltergehäuse 2. In Ergänzung zu Fig. 5 ist noch die genauere Ausgestaltung der Stirnfläche der umlaufenden Kante 31 zu erkennen, welche kreissektorförmig gewellt ist, um eine linienförmige Auflage statt einer flächenförmigen Auflage des Deckels 25 auf der Wand 22 zu erhalten.

Der Deckel 25 besitzt weiterhin Federbeine 38, welche mittels Rasthaken 39 hinter eine umlaufende Konsole 40 greifen und so den Deckel 25 gegenüber dem Schaltergehäuse 2 sowohl in axialer Richtung als auch in radialer Richtung festlegen.

Dabei geschieht die Festlegung in axialer Richtung durch die Rastnasen 39 und die umlaufende Nut 32, während die Festlegung des Deckels 25 in radialer Richtung gegenüber dem Schaltergehäuse 2 durch Anlage des Schalterdeckels an der zweiten Wand 22 sowie der Federbeine 38 an der Stirnfläche der Konsole 40 geschieht.

Dabei ist durch Einrasten in erwünschter Weise der Deckel drehbeweglich gegenüber dem Schaltergehäuse 2 gelagert. Die in den Figuren 5 und 6 vorgestellte Konfiguration ist allerdings nicht elastisch in dem Drehlager 31,32 gelagert.

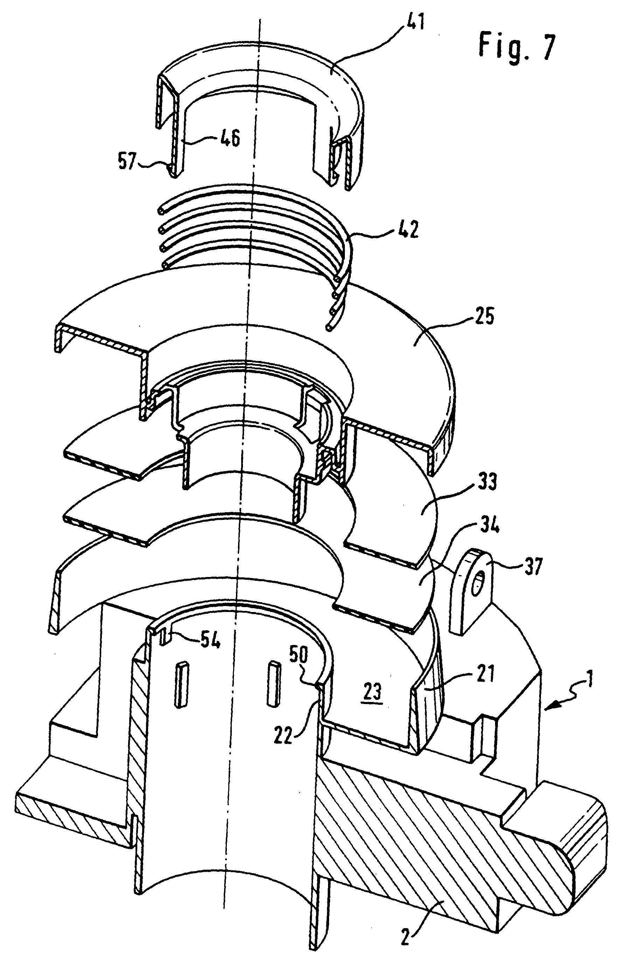

Fig. 7 zeigt ein anderes, abweichendes Ausführungsbeispiel, bei dem der Deckel 25 über ein Verriegelungsteil 41 gegenüber dem Gehäuse 2 des Schalters 1 verriegelt ist. Dabei ist im zusammengebauten Zustand das Verriegelungsteil 41 über die Spiralfeder 42 gegenüber dem Schaltergehäuse derart vorgespannt, daß die Feder 42 des das Verriegelungsteil 41 aus dem Gehäuse 2 herauszudrücken versucht. Die Feder 42 wirkt dementsprechend mit ihrem in Fig. 7 oberen Ende auf das Verriegelungsteil 41 und mit ihrem unteren Ende mittelbar auf das Schaltergehäuse 2 ein.

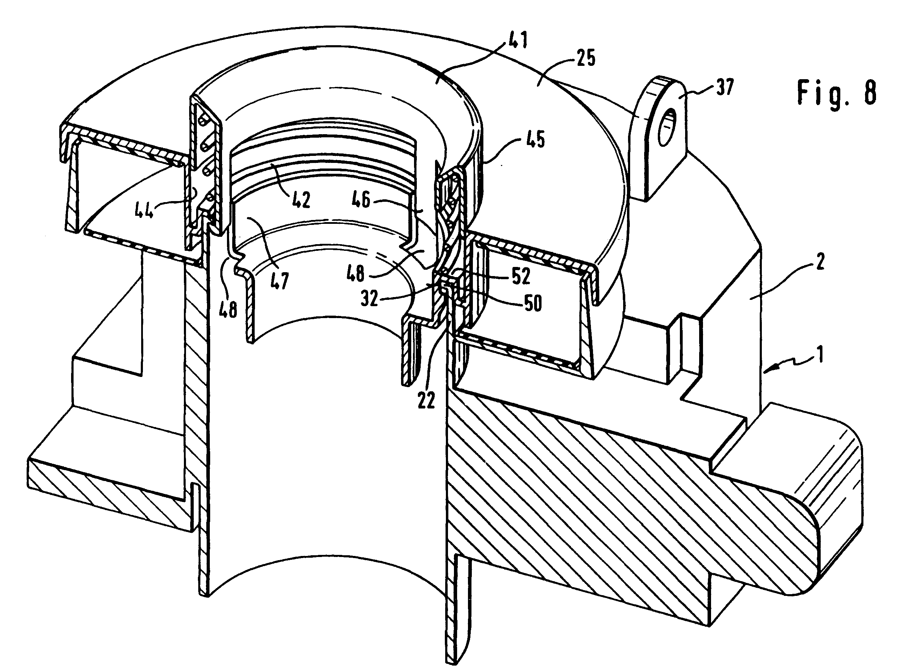

In Fig. 8 ist der mit der geschlossenen Kammer für die Wickelfeder versehene Lenkstockschalter 1 im zusammengebauten Zustand dargestellt. Weiterhin zeigt Fig. 8 das Verriegelungsteil 41 in einer Lage, in der der Deckel 25 gegenüber dem Schaltergehäuse 2 drehgesichert ist. Man erkennt, daß entsprechend Fig. 5 und 6 wiederum die umlaufende Nut 32 des Deckels 25 auf der inneren Wand 22 drehbar aufsitzt, wobei die innere Wand 22 an ihrem in Fig. 8 oberen Ende einen umlaufenden radialen Vorsprung 50 besitzt, welcher mit einem entsprechenden Vorsprung an der Seitenwand der Nut 32 eine Einrastung des Deckels 25 gegenüber der inneren Wand 22 erlaubt und somit den Deckel 25 sowohl in axialer Richtung zu sichern vermag. Längs der inneren Mantelfläche 44 des Deckels 25 ist die äußere Mantelfläche 45 des Verriegelungsteils 41 axial verschiebbar geführt. Das Verriegelungsteil ragt mit Federbeinen 46 durch entsprechende Öffnungen 48 an den Seitenwänden 47 des Deckels 25. Damit ist eine Drehbewegung des Deckels gegenüber dem Verriegelungsteil 41 durch Reibungskraft zumindest behindert.

In Höhe der Öffnungen 48 greifen die Federbeine 46 hinter den radial nach innen weisenden umlaufenden Vorsprung 50 und halten somit das von der Feder 42 in Fig. 8 nach oben gedrückte Verriegelungsteil 41 in Anlage an den umlaufenden Vorsprung 50 der inneren Wand 22.

Das untere Ende der Feder 42 wirkt dabei nicht direkt auf eine zugeordnete Kante des Schaltergehäuses 2, sondern auf eine ringförmige Auflagefläche 52. Damit wird über die Kraft der Feder der Boden der Nut 32 gegen den umlaufenden Vorsprung 50 der Wand 42 gepreßt und somit in elastischem Eingriff gehalten.

Aus Fig. 7 sind noch radial vorspringende Anschläge 54 ersichtlich, die eine Schwenkbewegung der Federbeine 46 beim Drehen des Verriegelungsteils 41 gegenüber dem Schaltergehäuse 2 verhindern. Eine derartige Verhinderung führt aber auch gleichzeitig zu einer entsprechenden Verhinderung einer Drehbewegung des Deckels 25 gegenüber dem Schaltergehäuse 2, da, wie weiter oben schon beschrieben, der Deckel 25 und das Verriegelungsteil 41 gegeneinander nicht verdrehbar sind.

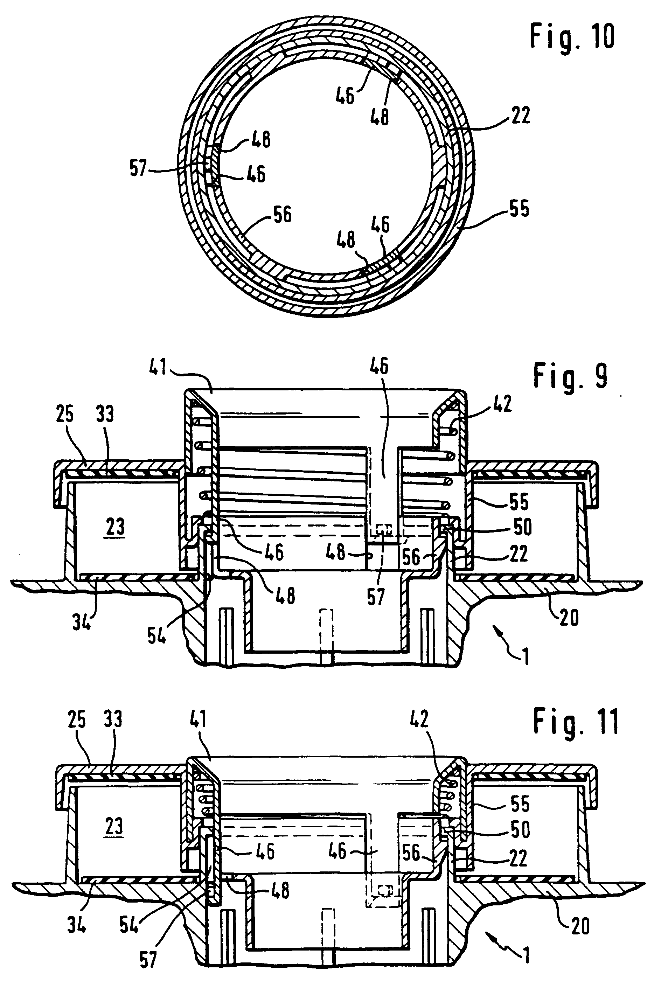

Fig. 9 zeigt den Schalter 1 in anderer Ansicht in der in Fig. 8 dargestellten Lage. Dabei ist ein Anschlag 54 an der Innenwand des Schaltergehäuses zu sehen, welcher in der Öffnung 48 des Deckels 25 erscheint, an dem dann ein Vorsprung am Federbein 46 des Verriegelungsgliedes 41 anliegt, welches durch die Öffnung 48 ragt.

Fig. 10 zeigt einen Schnitt durch den Deckel etwa in Höhe der Auflage des Deckels auf der Wand 22. Dabei erkennt man die innere umlaufende Kammerwand 55 des Deckels 25 und die innere Seitenwand 56 der Nut 32. Weiterhin zeigt Fig. 10 Öffnungen 48, durch welche drei Federbeine 46 des Verriegelungsteils 41 ragen. Weiter oben wurde schon erläutert, daß Seitenflächen der Rastvorsprünge 57 an den Enden der Federbeine 46 in Verbindung mit den Anschlägen 54 am Schaltergehäuse eine Drehbewegung des Verriegelungsteils 41 begrenzen.

Die Zeichnungen machen auch deutlich, daß das Verriegelungsteil entgegen der Kraft der Feder 42 beim Zusammenbau der Deckelkammer 23 nach innen verschoben werden kann, wodurch die Rastvorsprünge 57 der Federbeine 46 hinter den umlaufenden Vorsprung 50 an der inneren Wand 22 greifen und gleichzeitig eine Drehbewegung des Verriegelungsteils und damit des Deckels 25 durch die Wirkung der Anschläge 54 behindern.

Fig. 11 zeigt schließlich die Möglichkeit, das Verriegelungsteil 41 von einer drehfesten Lage gemäß Fig. 9 in eine drehbare Lage zu bringen, indem das Verriegelungsteil in seiner Längsrichtung in das Gehäuse des Schalters 1 hinein verschoben wird. Die Verschiebung kann dabei durch das Aufsetzen des Lenkrades auf den Lenkstock geschehen, wobei der Lenkstockschalter mit dem Lenkstockgehäuse fest verbunden ist. Infolge dessen zeichnet sich der Betriebs- oder Einbauzustand des Lenkstockschalters dadurch aus, daß das Verriegelungsteil wie aus Fig. 11 ersichtlich, nach innen geschoben ist, wobei die Rastvorsprünge 57 an den Federbeinen 46 nach unten verschoben werden und außer Eingriff zu den Anschlägen 54 kommen.

## Patentansprüche

1. Lenkstockschalter, insbesondere für Kraftfahrzeuge, dessen Gehäuse (2) ein Bodenteil und ein Deckelteil (20) aufweist, die jeweils mit einer zentralen Öffnung (24) zum Durchtritt einer Lenkstange versehen sind, wobei an dem lenkradseitigen Deckelteil (20) auf der dem Lenkrad zugewandten Seite eine im Wesentlichen die Mantelfläche eines Zylinders bildende erste Wand (21) einstückig angefügt ist, wobei die Längsachse des Zylinders mit der Längsachse der Öffnung (24) fluchtet, wobei ein Deckel (25) gegenüber dem Schaltergehäuse (2) drehbar gelagert ist, und wobei eine in Längsrichtung der Öffnung verschiebbar gelagerte Verriegelungseinrichtung den Deckel (25) gegenüber dem Schaltergehäuse (2) unverlierbar verrastet, wobei der Deckel (25) mit der ersten Wand (21) und dem Deckelteil (20) eine im Wesentlichen ringförmige Deckelkammer (23) formt, **dadurch gekennzeichnet, dass** die Verriegelungseinrichtung als einstückiges Verriegelungsteil (41) ausgebildet ist.

2. Lenkstockschalter nach Anspruch 1, **dadurch gekennzeichnet, daß** das Verriegelungsteil (41) in Längsrichtung der Öffnung (24) in dem Schaltergehäuse (2) und/oder dem Deckel (25) verschiebbar angeordnet ist und daß eine vorzugsweise spiralförmige Feder (42) vorgesehen ist, welche sich an ihrem eigenen an dem Verriegelungsteil und an ihrem anderen Ende, vorzugsweise mittelbar, an dem Schaltergehäuse (2) abstützt und so das Verriegelungsteil (41) in die Raststellung gegen das Schaltergehäuse (2) zieht.

3. Lenkstockschalter nach Anspruch 1 oder 2, **dadurch gekennzeichnet, daß** das Verriegelungsteil (42) mit seinem in das Schaltergehäuse (2) ragenden, vorzugsweise Federbeine (46) tragenden Ende unter Vorspannung der Feder (42), in aus dem Schaltergehäuse (2) weisender Richtung an einem umlaufenden Vorsprung (50) des Schaltergehäuses (2) angreift und in dieser Lage kraftschlüssig, vorzugsweise formschlüssig, gegen Verdrehen um die Längsachse der Öffnung (24) gesichert ist.

4. Lenkstockschalter nach einem der vorhergehenden Ansprüche, **dadurch gekennzeichnet, daß** das Verriegelungsteil (41) gegenüber dem Deckel (25) unverdrehbar geführt ist.

5. Lenkstockschalter nach Anspruch 4, **dadurch gekennzeichnet, daß** das Verriegelungsteil (41) mit seinen mit dem Schaltergehäuse (2) verrasteten Federbeinen (46) durch zugeordnete Deckelöffnungen (48) in dem Deckel (25) greift.

6. Lenkstockschalter nach einem der vorhergehenden Ansprüche, **dadurch gekennzeichnet, daß** der Deckel (25) eine umlaufende Nut (32) aufweist, über die er auf einer umlaufenden Kante (32) des Schaltergehäuses (2) gegenüber diesem drehbar geführt ist.

7. Lenkstockschalter nach einem der vorhergehenden Ansprüche, **dadurch gekennzeichnet, daß** sich die Feder (43) über den Deckel (25) an dem Schaltergehäuse (2) abstützt.

8. Lenkstockschalter nach Anspruch 7, **dadurch gekennzeichnet, daß** die Feder etwa in Höhe des Drehlagers an dem Deckel (25) angreift und so den Deckel in federndem Lageeingriff mit dem Schaltergehäuse (2) hält.

9. Lenkstockschalter nach einem der vorhergehenden Ansprüche, **dadurch gekennzeichnet, daß** durch eine entgegen der Feder (42) wirkende Kraft in Längsrichtung der Zentralöffnung (24) das Ende (46) des Verriegelungsteils (41) außer Rasteingriff gegenüber dem Schaltergehäuse (2) und dabei in eine diesem gegenüber drehbare Stellung bringbar ist.

10. Lenkstockschalter nach einem der vorhergehenden Ansprüche, **dadurch gekennzeichnet, daß** zur Drehsicherung des Verriegelungsteils (41) die Federbeine (46) mit Vorsprüngen (57) zwischen radial von dem Schaltergehäuse vorspringenden Anschlägen (54) geführt sind, welche sich in axialer Richtung erstrecken.

11. Lenkstockschalter nach Anspruch 10, **dadurch gekennzeichnet, daß** das Verriegelungsteil (41) derart weit in das Innere des Schaltgehäuses einschiebbar ist, daß die Rastvorsprünge (57) der Federbeine (46) außerhalb des Eingriffsbereiches der Anschläge (54) gelangen.

12. Lenkstockschalter nach einem der vorangegangenen Ansprüche, **dadurch gekennzeichnet, daß** in der Deckelkammer (23) zumindest eine Dämpfungsscheibe (33,34) eingelegt ist, welche die Bewegung der Wickelfeder innerhalb der Kammer dämpft.

13. Deckel für einen Lenkstockschalter nach einem der vorangegangenen Ansprüche, **dadurch gekennzeichnet, daß** das Verriegelungsteil (41) mit dem Deckel über die Federbeine (46) der Verriegelungseinheit (41) verrastbar ist.

## Claims

1. Steering column switch, in particular for motor vehicles, of which the housing (2) comprises a bottom part and a cover part (20) both of which are provided with a central opening (24) for a steering column, a first wall (21) substantially forming the outer surface of a cylinder being integrally formed on the steering wheel-side cover part (20) on the side directed to the steering wheel, with the longitudinal axis of the cylinder being arranged flush with the longitudinal axis of the opening (24), a cover (25) being rotatably mounted with respect to the switch housing (2), and a locking device displaceably mounted in the longitudinal direction of the opening captively latching the cover (25) with respect to the switch housing (25), the cover (25) forming with the first wall (21) and the cover part (20) a substantially annular cover chamber (23), **characterised in that** the locking device is constructed as an integral locking part (41).

2. Steering column switch according to claim 1, **characterised in that** the locking part (41) is arranged in the switch housing (2) and/or the cover (25) such that it can be displaced in the longitudinal direction of the opening (24), and that a preferably spiral-shaped spring (42) is provided, with said spiral-shaped spring being supported on the locking part on one end and preferably supported directly on the switch housing (2) on its other end such that the locking part (41) is pulled toward the switch housing (2) into the locking position.

3. Steering column switch according to claim 1 or 2, **characterised in that** the end of the locking part (42) that protrudes into the switch housing (2) and preferably carries elastic legs (46) engages with a circumferential projection (50) of the switch housing (2) under the influence of the prestress of the spring (42), namely in the direction out of the switch housing (2), and that the locking part is non-positively, or preferably positively, secured from being turned around the longitudinal axis of the opening (24) in this position.

4. Steering column switch according to any of the preceding claims, **characterised in that** the locking part (41) cannot be turned relative to the cover (25).

5. Steering column switch according to claim 4, **characterised in that** the elastic legs (46) of the locking part (41) which are latched to the switch housing (2) extend through associated cover openings (48) in the cover (25).

6. Steering column switch according to any of the preceding claims, **characterised in that** the cover (25) comprises a circumferential groove (32), with said cover being guided on a circumferential edge (32) of the switch housing (2) such that it can be turned relative to the switch housing via the aforementioned groove.

7. Steering column switch according to any of the preceding claims, **characterised in that** the spring (43) is supported on the switch housing (2) via the cover (25).

8. Steering column switch according to claim 7, **characterised in that** the spring engages with the cover (25) at the approximate elevation of the rotatable bearing and consequently holds the cover in elastic contact with the switch housing (2).

9. Steering column switch according to any of the preceding claims, **characterised in that** the end (46) of the locking part (41) can be disengaged from the switch housing (2) in the longitudinal direction of the central opening (24), and that the locking part can thus be turned relative to the switch housing by applying a force that acts opposite to the spring (42).

10. Steering column switch according to any of the preceding claims, **characterised in that** the locking part (41) is secured from rotating by guiding projections (57) of the elastic legs (46) between limit stops (54) that extend in the axial direction and radially protrude from the switch housing.

11. Steering column switch according to claim 10, **characterised in that** the locking part (41) can be inserted into the interior of the switch housing to such an extent that the catch projections (57) of the elastic legs (46) are positioned outside of the region in which they engage with the limit stops (54).

12. Steering column switch according to any of the preceding claims, **characterised in that** at least one damping disc (33, 34) that dampens the movement of the spiral spring inside the chamber is inserted into the cover chamber (23).

13. Cover for a steering column switch according to any of the preceding claims, **characterised in that** the locking part (41) can be engaged with the cover by the elastic legs (46) of the locking part (41).

## Revendications

1. Commutateur de colonne de direction, notamment pour véhicule automobile, dont le boîtier (2) comprend une partie de fond et une partie formant couvercle (20) qui sont pourvues chacune d'une ouverture centrale (24) pour le passage d'un arbre de direction, dans lequel une première paroi (21) formant essentiellement la surface d'enveloppe d'un cylindre est jointe, d'une pièce, à la partie de couvercle (20) côté volant de direction, sur la face tournée vers le volant de direction, l'axe longitudinal du cylindre étant aligné avec l'axe longitudinal de l'ouverture (24), dans lequel un couvercle (25) est monté de façon à pouvoir tourner par rapport au boîtier de commutateur (2), et dans lequel un dispositif de verrouillage monté mobile en translation suivant la direction longitudinale de l'ouverture assure, d'une manière imperdable, un enclenchement du couvercle (25) par rapport au boîtier de commutateur (2), et le couvercle (25) forme, avec la première paroi (21) et la partie formant couvercle (20), une chambre de couvercle (23) essentiellement annulaire, **caractérisé en ce que** le dispositif de verrouillage est réalisé comme une partie de verrouillage (41) d'une pièce.

2. Commutateur de colonne de direction suivant la revendication 1, **caractérisé en ce que** la pièce de verrouillage (41) est montée mobile en translation suivant la direction longitudinale de l'ouverture (24) dans le boîtier de commutateur (2) et/ou le couvercle (25), et **en ce qu'**il est prévu un ressort (42), de préférence hélicoïdal, qui prend appui par l'une de ses extrémités sur la pièce de verrouillage et par son autre extrémité, de préférence indirectement, sur le boîtier de commutateur (2) et tire ainsi la pièce de verrouillage (41) dans la position d'enclenchement en appui sur le boîtier de commutateur (2).

3. Commutateur de colonne de direction suivant la revendication 1 ou 2, **caractérisé en ce que**, par son extrémité en saillie dans le boîtier de commutateur (2) qui porte de préférence des pattes élastiques (46), la pièce de verrouillage (41) s'accroche, sous l'effet d'une précontrainte du ressort (42) et suivant un sens orienté vers l'extérieur du boîtier de commutateur (2), sur une partie en saillie (50) du boîtier de commutateur (2) qui en fait tout le tour, et est immobilisée dans cette position par application de force, de préférence par complémentarité de formes, à l'encontre d'une rotation autour de l'axe longitudinal de l'ouverture (24).

4. Commutateur de colonne de direction suivant l'une des revendications précédentes, **caractérisé en ce que** la pièce de verrouillage (41) est guidée sans possibilité de rotation par rapport au couvercle (25).

5. Commutateur de colonne de direction suivant la revendication 4, **caractérisé en ce que**, par ses pattes élastiques (46) enclenchées sur le boîtier de commutateur (2), la pièce de verrouillage (41) s'engage dans des ouvertures de couvercle (48) associées ménagées dans le couvercle (25).

6. Commutateur de colonne de direction suivant l'une des revendications précédentes, **caractérisé en ce que** le couvercle (25) comporte une gorge (32) qui en fait tout le tour et au moyen de laquelle il est guidé sur un bord (32) du boîtier de commutateur (2) qui en fait tout le tour, de façon à pouvoir tourner par rapport à ce boîtier de commutateur.

7. Commutateur de colonne de direction suivant l'une des revendications précédentes, **caractérisé en ce que** le ressort (43) prend appui sur le boîtier de commutateur (2) par l'intermédiaire du couvercle (25).

8. Commutateur de colonne de direction suivant la revendication 7, **caractérisé en ce que** le ressort exerce son action sur le couvercle (25) approximativement au niveau du montage en rotation et maintient ainsi le couvercle en liaison avec le boîtier de commutateur (2) en exerçant une intervention élastique sur la position.

9. Commutateur de colonne de direction suivant l'une des revendications précédentes, **caractérisé en ce qu'**au moyen d'une force dirigée suivant la direction longitudinale de l'ouverture centrale (24) et s'exerçant à l'encontre de l'action du ressort (42), l'extrémité (46) de la pièce de verrouillage (41) peut être amenée hors de prise d'enclenchement par rapport au boîtier de commutateur (2), et ainsi dans une position où elle peut tourner par rapport à celui-ci.

10. Commutateur de colonne de direction selon l'une des revendications précédentes, **caractérisé en ce que** pour l'immobilisation en rotation de la pièce de verrouillage (41), les pattes élastiques (46) sont guidées, par des parties en saillie (57), entre des butées (54) qui font saillie radialement sur le boîtier de commutateur et qui sont orientées suivant la direction axiale.

11. Commutateur de colonne de direction suivant la revendication 10, **caractérisé en ce que** la pièce de verrouillage (41) peur être enfoncée à l'intérieur du boîtier de commutation dans une mesure permettant aux parties en saillie d'enclenchement (57) des pattes élastiques (46) de parvenir hors du domaine de prise des butées (54).

12. Commutateur de colonne de direction suivant l'une des revendications précédentes, **caractérisé en ce qu'**au moins un disque amortisseur (33, 34) est placé dans la chambre de couvercle (23), ce disque amortisseur amortissant le mouvement du ressort hélicoïdal dans la chambre.

13. Couvercle pour un commutateur de colonne de direction suivant l'une des revendications précédentes, **caractérisé en ce que** la pièce de verrouillage (41) peut être enclenchée sur le couvercle par l'intermédiaire des pattes élastiques (46) de la pièce de verrouillage (41).
